# NEUE EUROPÄISCHE PATENTSCHRIFT

(11) **EP 0 853 299 B2**
(45) Veröffentlichungstag und Bekanntmachung des Hinweises auf die Entscheidung über den Einspruch: **26.04.2006**
(45) Hinweis auf die Patenterteilung: 31.07.2002
(21) Anmeldenummer: 98100269.4
(22) Anmeldetag: 09.01.1998
(51) Int. Cl.: G08B 13/194, E05F 15/20

(54) **Verfahren und Vorrichtung zur Ansteuerung von Türanlagen in Abhängigkeit von der Anwesenheit von Personen**
Method and device for actuating a door assembly in response to the presence of persons
Procédé et dispositif de commande d'un aménagement pour porte en réponse à la présence des personnes

(30) Priorität: 13.01.1997 DE 19700811
(43) Veröffentlichungstag der Anmeldung: 15.07.1998
(73) Patentinhaber: Landert, Heinrich, 8180 Bülach (CH)
(72) Erfinder: Landert, Heinrich, 8180 Bülach (CH); Bichsel, Martin, 8544 Bertschikon b/Attikon (CH)
(74) Vertreter: Riebling, Peter

(56) Entgegenhaltungen:
- EP-A- 0 224 253
- EP-A- 0 344 404
- EP-A- 0 356 734
- EP-A- 0 577 491
- DE-A- 4 417 128
- DE-A- 19 522 760
- DE-C- 3 634 628
- US-A- 4 581 634
- US-A- 4 712 103
- US-A- 5 001 557

## Beschreibung

Gegenstand der Erfindung ist ein Verfahren und eine Vorrichtung zur Ansteuerung von Türanlagen, wobei eine Erfassung und Auswertung von Personen vor Türanlagen durchgeführt wird, mit dem Ziel, die Türanlage in Abhängigkeit von Personen, die sich vor der Türanlage bewegen, zu öffnen und zu schließen.

Ein derartiges Verfahren ist beispielsweise mit dem Gegenstand der US 4,249,207 A bekannt geworden. Bei dieser bekannten Anordnung wird ein sogenannter Videoeindringalarm erzeugt, wenn ein oder mehrere Personen in eine bestimmte Überwachungsfläche eindringen. Hierzu wird die Überwachungsfläche in eine bestimmte Anzahl von Unterflächen unterteilt und es wird untersucht, ob sich Personen in diesen zellenartigen Unterflächen befinden oder nicht. Entsprechend der Erfassungssituation wird dann ein entsprechender Alarm ausgelöst.

US 5,001,557 beschreibt eine Türsteuerung, die mit Infrarotdetektoren Funktioniert.

Der Erfindung liegt die Aufgabe zugrunde, ein Verfahren und eine Vorrichtung der eingangs genannten Art so weiterzubilden, daß mit möglichst geringem Aufwand ein oder mehrere Türanlagen an einem Gebäude in Abhängigkeit von dem Aufenthaltsort, der Bewegungsrichtung und der Anzahl der Personen vor diesen Türanlagen gesteuert werden können.

Zur Lösung der gestellten Aufgabe ist die Erfindung durch die technische Lehre des Anspruches 1 oder des Anspruchs 18 gekennzeichnet.

Merkmal der Erfindung ist, daß in einem ersten Verfahrensschritt zunächst mit mindestens einer Videokamera der Raum vor der Türanlage erfaßt wird und zwar in der Weise, daß zuerst lediglich der "leere" Raum" erfaßt wird. Unter dem Begriff "leerer Raum" wird verstanden, daß dieser Raum zu einem Zeitpunkt erfaßt wird, wo keinerlei oder nur wenig Personenbewegungen in diesem Raum stattfinden. Zum Beispiel wird der zu überwachende Raum vor der Türanlage von der Videokamera zunächst zu einem Zeitpunkt erfasst, an dem im wesentlichen keine Bewegung in diesem Raum stattfindet, z.B. am frühen Morgen oder am späten Abend, wobei die in der Regel in diesem Raum befindlichen feststehenden Gegenstände, wie z. B. Blumenkübel, Laternenmasten und dgl. mehr, von der Videokamera erfasst werden, und das System den Standort und die Anordnung dieser feststehenden Gegenstände lernt.

Als leerer Raum wird hierbei definiert, wenn im zu überwachenden Raum innerhalb eines Zeitraumes von etwa 3-4 Sekunden keinerlei Bewegungen stattfinden bzw. detektiert werden. Es wird daraus dann ein sogenanntes Referenzbild gewonnen, welches als Referenzmodell des leeren Raumes dient, d.h. der leere Raum mit allen seinen vorhandenen Gegenständen wird als Modell in einem Speicher niedergelegt und dient als Vergleichsmaßstab.

In einer bevorzugten Ausgestaltung der vorliegenden Erfindung ist es vorgesehen, daß die Videokamera etwa alle 3-4 Sekunden untersucht, ob der Raum leer ist oder nicht und - sollte dies der Fall sein - dann ein neues Referenzmodell des leeren Raumes erstellt. Hierbei ist wichtig, daß in diesen Zeitintervallen nicht immer ein vollständig neues Modell des leeren Raumes erstellt wird, sondern daß in einem iterativen Näherungsprozeß dieser leere Raum ständig an die tatsächlichen Verhältnisse angenähert wird. D. h. in der Praxis, daß wenn innerhalb der letzten 3-4 Sekunden keine Bewegung festgestellt wurde, aber neue Gegenstände im leeren Raum als feststehend erkannt wurden, daß dann dieses Modell des leeren Raumes nur um den neu hinzugekommenen, feststehenden Gegenstand erweitert und ergänzt wird.

Nachdem in einem ersten Verfahrensschritt nun ein Modell des leeren Raumes erzeugt wurde, wird nun mit der Videokamera der leere Raum ständig und fortlaufend beobachtet, um festzustellen, ob der Raum wirklich leer ist oder ob eine Bewegung in diesem Raum stattfindet.

Wird eine Bewegung in diesem Raum detektiert, was durch Auswertung des Videobildes stattfinden kann oder auch durch HinzunahmeweitererSignalquellen, wie z.B. Infrarotdetektoren, Gewichtssensoren und Ultraschallsensoren festgestellt werden kann, dann wird bei einem nicht leeren Raum, d. h. bei einer erfaßten Bewegung, in einen nächsten Verfahrensschritt festgestellt, ob es sich bei dem bewegten Objekt um ein zur Benützung der Türanlage berechtigtes und dies beabsichtigendes Objekt, beispielsweise eine Person, handelt.

Es wird hierzu eine Musteranalyse der sich bewegenden Kontur durchgeführt, d. h ein sich bewegender Mensch wird nur dann als Mensch erkannt, wenn die sich bewegende Kontur eine gewisse Fläche bedeckt und die Form und Bewegung der erfaßten Kontur menschenähnlich ist. D. h. z. B. ein sich bewegender Kinderwagen wird nicht als sich bewegender Mensch erkannt, weil die Form des Kinderwagens nicht der eines Menschen entspricht. Es wird allerdings der den Kinderwagen schiebenden Mensch erkannt.

Sich bewegende Tiere (z. B. Hund oder Katze) werden aufgrund ihrer abweichenden Bewegungskontur nicht als sich bewegender Mensch erkannt und daher wird folglich die Türanlage auch nicht angesteuert, es sei denn, eine Türbenutzung durch diese Tiere ist beabsichtigt.

Nach der Erfassung und Analyse der Bewegungskontur in dem vorgenannten zweiten Verfahrensschritt wird nun in dem dritten Verfahrensschritt, wie oben angegeben, die Bewegungskontur des Menschen analysiert. Wird erkannt, daß es sich um einen sich bewegenden Menschen handelt, dann wird in einem vierten Verfahrensschritt der Standort des sich bewegenden Menschen bestimmt. Hierbei ist es wichtig, daß zunächst die Distanz des Menschen von der Videokamera bestimmt wird. Aufgrund dieser Distanzmessung kann dann der genaue Standort im Raum berechnet werden, d. h. es kann in Koordinaten angegeben werden, wo genau sich die Person vor der Türanlage befindet.

In einem davorliegenden Verfahrensschritt wird noch angegeben, daß die Videokamera natürlich auch mit dem Erfassen des leeren Raumes noch ein Grundrißmodell des Raumes mit Position der Tür aufgenommen hat und daß dieses Grundrißmodell in einem Speicher niedergelegt wird.

In einem anderen, abweichenden Ausführungsbeispiel ist es vorgesehen, daß das Grundrißmodell nicht von der Kamera erfaßt wird (eventuell auch von einer anderen Kamera), sondern daß das Grundrißmodell durch manuelle Eingabe an einem entsprechenden Terminal in den Speicher der Rechenanlage eingeschrieben wird, wo es dann niedergelegt wird.

Aufgrund der Koordinaten des sich bewegenden Menschen und aufgrund des Vergleiches mit dem niedergelegten Grundrißmodell kann nun ohneweiteres die Art und Bewegungsrichtung des sich bewegenden Menschen vor der Türanlage erfaßt werden.

In einem weiteren Verfahrensschritt wird nun das Überwachungsareal in verschiedene Regionen unterteilt, wobei mindestens eine Region definiert wird, bei deren Betreten die Türanlage angesteuert wird, während andere Regionen vorhanden sind, die nicht zur Ansteuerung der Türanlage führen.

Erst wenn das erfaßte Bewegungsmodell prognostiziert, daß die Person die der Türanlage zugeordnete Region des Überwachungsareals zu betreten beabsichtigt oder betritt, wird ein Öffnungssignal an die Türanlage abgegeben und die Türanlage wird geöffnet.

Dieses Regionenmodell hat den Vorteil, daß die Türanlage dann nicht geöffnet wird, wenn die Videokamera in Verbindung mit dem vorher erwähnten Regionen, z. B. eine an der Türanlage vorbeilaufende Person erfaßt, die aufgrund ihrer Bewegungsrichtung und ihrer Bewegungsgeschwindigkeit offensichtlich nicht die Absicht hat, in die Türanlage hineinzulaufen.
Auf diese Weise wird mit dem neuartigen Verfahrensmodell erreicht, daß dieTüranlage nur dann auf Öffnung oder Schließung angesteuert wird, wenn eine vor der Türanlage sich bewegende Person mit entsprechender Geschwindigkeit und Bewegungsrichtung auf die Türanlage zusteuert.

In analoger Weise erfolgt das Öffnen und Schließen der Türanlage vom Inneren eines Gebäudes her, so daß also auch auf der Innenseite eines Gebäudes eine entsprechende Überwachungsanlage angeordnet ist, die ein intelligentes Öffnen und Schließen der Türanlage in Abhängigkeit von der das Gebäude verlassenden Person bewerkstelligt.

In einer weiteren Ausführungsform der vorliegenden Erfindung ist es vorgesehen, daß in einem untergeordneten Verfahrensschritt ermittelt wird, wie breit die Person ist, welche auf die Türanlage zusteuert. Hier kann z. B. erfaßt werden, ob die Person einen Kinderwagen schiebt, ob sie mehrere Pakete trägt oder einen sonstigen ungewöhnlichen Öffnungsbedarf für die Tür aufweist. Je breiter nämlich die Person ist, desto weiter kann die Türanlage geöffnet werden und dementsprechend wird also die Türanlage nur so weit geöffnet, daß ein bequemes Durchgehen der vor der Türanlage sich bewegenden Person gewährleistet ist. Damit ist nämlich der Vorteil verbunden, daß die Tür nur so weit geöffnet wird, daß ein unnötiger Wärme- und Strömungsverlust aus dem Gebäude ins Freie hinein vermieden wird.

Ebenso ist es in einer Weiterbildung der vorliegenden Erfindung vorgesehen, daß der Beginn und/oder die Geschwindigkeit von Türöffnung und/oder Türschließung in Abhängigkeit vom Standort, der Bewegungsrichtung und vor allem von der Bewegungsgeschwindigkeit der sich der Türanlage nähernden Personen gesteuert wird. Eine sich schnell der Türanlage nähernde Person, die in der auslösenden Türregion erfaßt wird, führt zu einer schnelleren Öffnung der Türflügel als vergleichsweise eine sich langsam nähernde Person.

In einer Weiterbildung der vorliegenden Erfindung ist es vorgesehen, daß Lichtreflexionen in dem Überwachungsareal, z.B. auf dem Fußboden, im Bereich der Wände der Türanlagen oder an sonstigen Umfassungswänden dadurch ausgeschaltet werden, daß die Videokamera mit einem Polarisationsfilter arbeitet.

Ein eventueller Schattenwurf der überwachenden Personen wird dadurch erkannt und beseitigt, daß man dem Schatten bestimmte Erkennungskriterien zuordnen kann und damit einen Schattenwurf ausschlie-ßen kann, so daß nur effektiv die Bewegungskontur der zu überwachenden Person selbst erfaßt wird, nicht aber deren Lichtschatten.

In einer bevorzugten Ausgestaltung dervorliegenden Erfindung (Vorrichtung) wird es bevorzugt, wenn die Kamera etwa der Türanlage diametral gegenüberliegt, aber in einer etwas angehobenen Position von z. B. 5 m über dem Erdboden, weil mit dieser erhöhten Position diametral gegenüber der Türanlage der Vorteil erreicht wird, daß bei einer möglichst hoch angebrachten Kamera ein relativ kleiner Blickwinkel der Kamera auf die zu überwachende Person erreicht wird, d. h. es ist eine sehr fein auflösende Erkennung von sich unterhalb der Kamera bewegenden Personen möglich.

Selbstverständlich ist die Erfindung nicht darauf beschränkt, es können auch mehrere Kameras angeordnet werden, deren Blickwinkel sich auch überschneidet, wobei das Kamerabild mehrerer Kameras ausgewertet wird.

Ebenso kann statt einer einzigen, einäugigen Videokamera auch eine Stereokamera verwendet werden.
Das Bild der einen Kamera wird unter der Annahme einer vordefinierten Bildfläche auf das von der zweiten Kamera zu erwartende Bild umgerechnet und durch Vergleich von berechnetem und effektiv empfangenem Bild auf Anwesenheit und/oder Veränderungen von Objekten in der Bildfläche geschlossen.

Dabei wird die vordefinierte Bildfläche im Verlauf sich folgender Bildanalysen aufgrund der jeweils vorliegenden Ergebnisse angepasst bzw. neu gewählt. Es ist möglich, auch weitere Parameter wie beispielsweise Bildausschnitt, Frequenz der Bildanalysen, Bildauflösung im Verlauf sich folgender Bildanalysen aufgrund der jeweils vorliegenden Ergebnisse anzupassen bzw. neu zu wählen, wobei zum Erreichen absoluter Betriebssicherheit die Daten mehrfach vorhandener Elemente (z.B. mehrerer Kameras) genutzt werden.

Auch ist es vorgesehen, daß zusätzlich zur Videokamera, die diametral der Türanlage gegenüberliegt, noch weitere Kameras angeordnet werden, die z. B. seitlich von der Türanlage angeordnet werden.

In einer anderen Ausgestaltung der Erfindung ist es vorgesehen, daß mit einer relativ niedrig stehenden Kamera, z. B. einer Höhe von etwa 2 m ein hoher Beobachtungspunkt dadurch erreicht wird, daß das Kamerabild über einen hochliegenden Spiegel umgelenkt wird und von diesem Spiegel aus das Überwachungsareal erfaßt wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert in Draufsicht die Situation vor einer Türanlage;
- Figur 2:: Die Vorderansicht der Türanlage nach Figur 1;
- Figur 3:: Die Seitenansicht der Türanlage nach Figur 1 und 2;
- Figur 4:: Der erste Teil des Verfahrensschemas;
- Figur 5:: Der zweite Teil des Verfahrensschemas;
- Figur 6:: Schematisiert ein Auswertungsbild der Videokamera
- Figur 7:: Beispielhaft den Einsatz von zwei gleichgerichteten Kameras (Sterokamera).

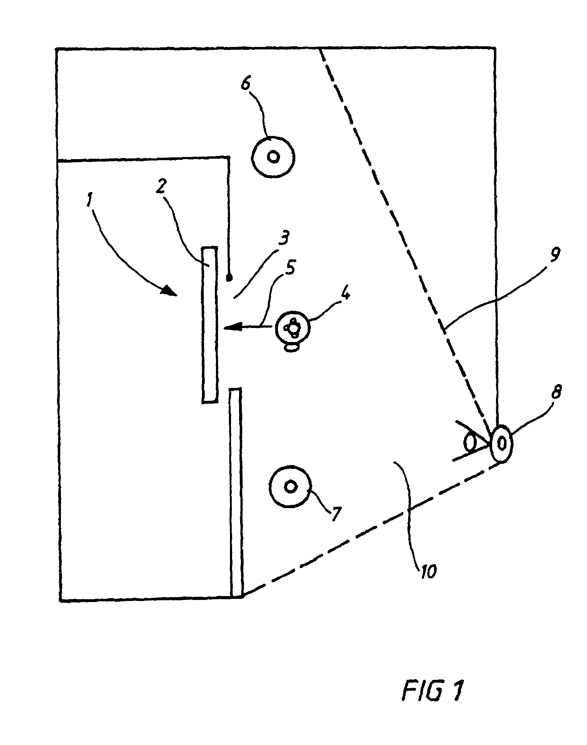

In Figur 1 ist als Beispiel eine Türanlage 1 eines Gebäudes dargestellt, wobei eine einflügelige Schiebetür 2 verwendetwird. Selbstverständlich ist diese Erfindung nicht auf die Verwendung einer derartigen Türanlage beschränkt. Statt einer einflügeligen Schiebetür können mehrflügelige Schiebetüren verwendet werden, Klapptüren, Hebetüren, Drehtüren, Schwenktüren und dgl. Türmodelle mehr. Es geht bei der vorliegenden Erfindung also im wesentlichen darum, ein oder mehrere Eingangsöffnungen 3 an einem Gebäude in intelligenter Weise in Abhängigkeit von vor der Türanlage 1 sich befindlichen Personen 4 zu öffnen und zu schließen.

Hierzu sieht die Erfindung mindestens eine Videokamera 8 vor, die etwa diametral der Türanlage 1 gegenüberliegt und die einen Beobachtungswinkel 9 hat, welcher ein größeres Überwachungsareal 10 definiert. Dieses Überwachungsareal 10 sollte vorteilhaft die Türanlage 1 selbst umfassen und einen relativ breiten seitlichen Bereich von etwa 3 m links und rechts der Türanlage, um seitlich an der Türanlage 1 vorbeigehende Personen mit Sicherheit zu erfassen und auszuschließen.

Im gezeigten Anwendungsbeispiel sind im Überwachungsareal 10 noch feststehende Gegenstände 6, 7 angeordnet, die z. B. Blumenkübel oder dgl. sein können.
Im übrigen bewegt sich die Person 4 in Pfeilrichtung 5 auf die Türanlage 1 zu.

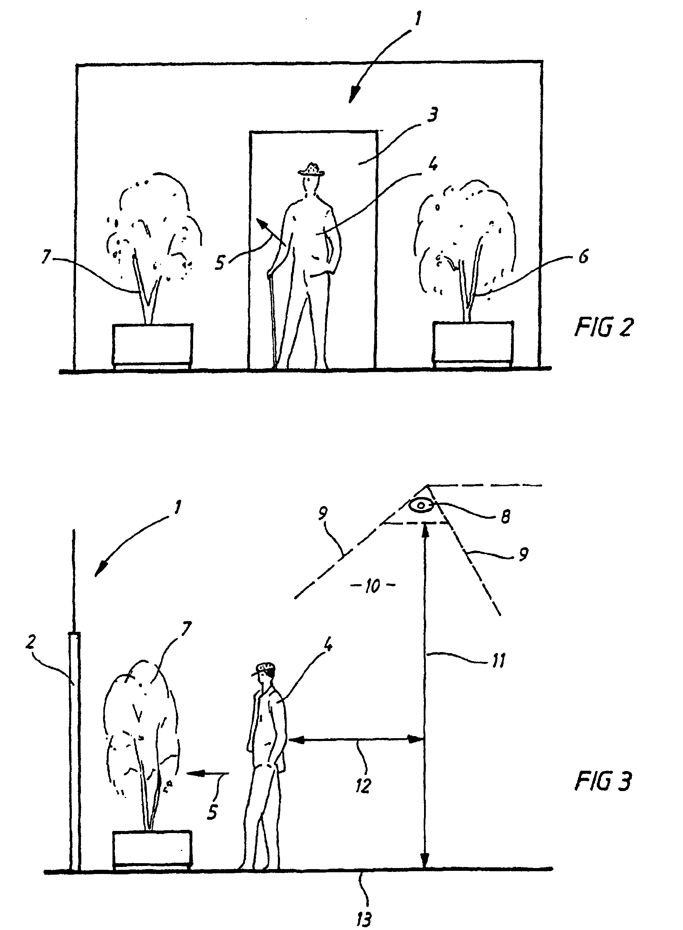

Die Figuren 2 und 3 zeigen die gleiche Situation wie Figur 1, wobei erkennbar ist, daß die Kamera 8 auch in einem erhöhten Standpunkt über dem Fußboden 13 angeordnet werden kann. Hierbei weist die Kamera 8 eine Höhe 11 über dem Fußboden 13 sowie eine Distanz 12 zu der zu beobachtenden Person 4 auf.

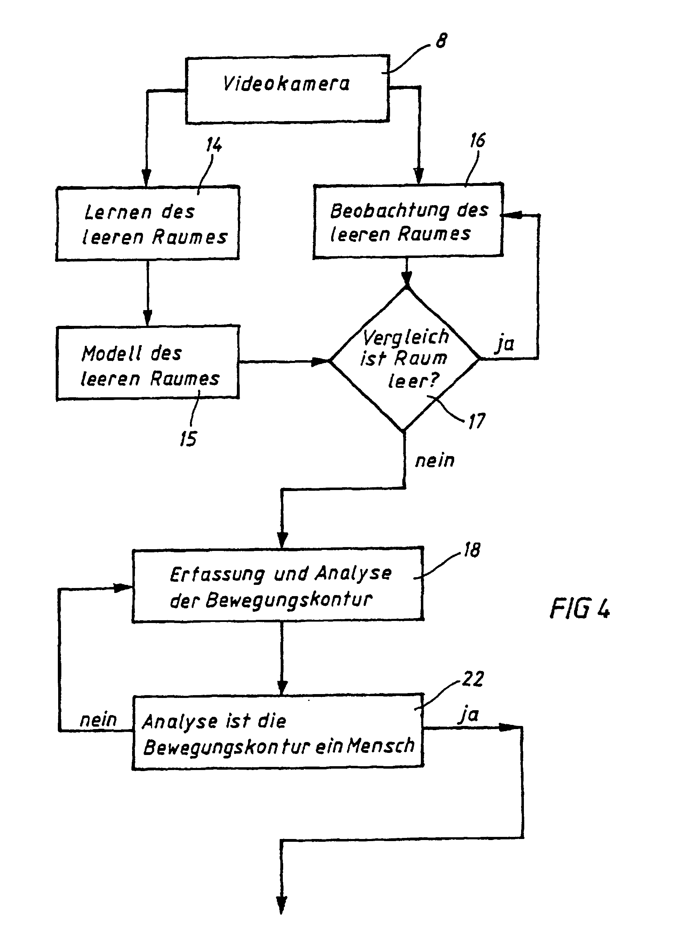

In Figur 4 sind nun die verschiedenen Verfahrensschritte nacheinanderfolgend dargestellt, wobei die Videokamera 8 zunächst bei Position 14 ein Model des leeren Raumes erstellt. Hierbei wird auf die allgemeine Beschreibung hingewiesen, wo angegeben wurde, daß das Überwachungsareal dann als leerer Raum erkannt wird, wenn innerhalb von beispielsweise 3-4 Sekunden keine Bewegung in diesem Raum stattfindet.

Es wird dann bei Position 15 ein Modell des leeren Raumes erstellt und gleichzeitig überwacht die Videokamera 8 bei Position 16 diesen leeren Raum dahingehend, ob eine Bewegung stattfindet oder nicht.

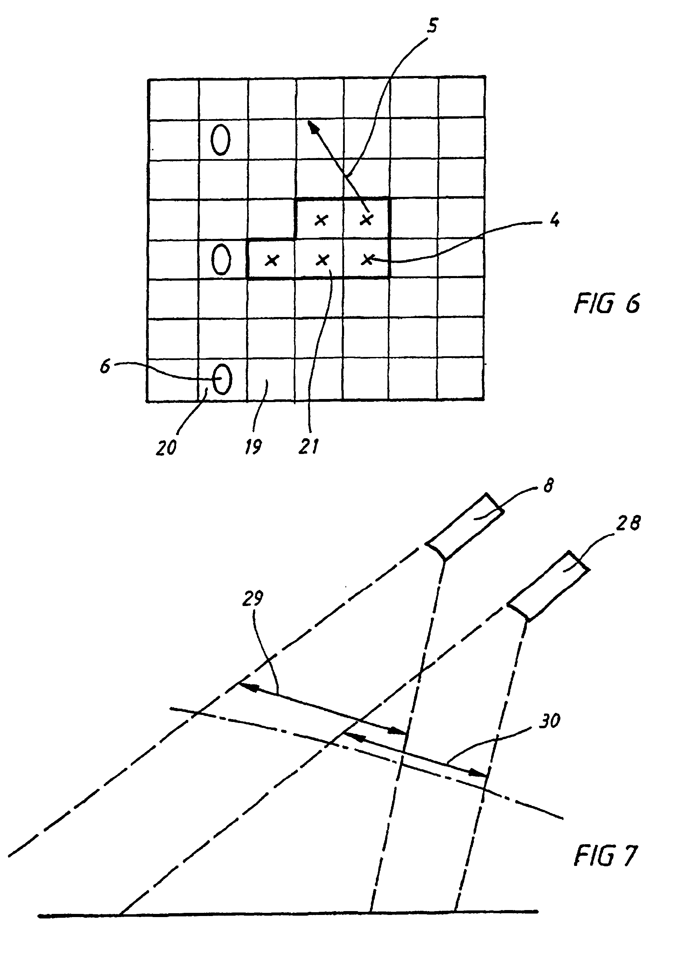

Bei Position 17 wird untersucht, ob der Raum leer ist oder nicht. Ist er leer, wird er weiter beobachtet, ist er nicht leer, dann wird bei Position 18 festgestellt, ob das sich bewegende Objekt ein Mensch ist oder nicht. Hierzu wird auf Figur 6 verwiesen, wo als Auswertungsmodell der leere Raum in Form eines Rasters dargestellt ist und erkennbar ist, daß eine Vielzahl von Zellen 19, 20, 21 vorhanden sind, wobei die Zellen matrixartig spalten- und zeilenweise angeordnet sind und als Beispiel angegeben ist, daß die Zelle 20 mit einem stillstehenden Objekt gefüllt ist, z. B. dem feststehenden Gegenstand 6, 7.
In diesen Überwachungsräumen wird der zu erfassende Mensch 4 als Bewegungscluster erkannt, der eine Reihe von Zellen 21 bedeckt, wobei sich dieses Bewegungscluster in Pfeilrichtung 5 bewegt.

Es erfolgt nun bei Position 22 eine Analyse der Bewegungskontur. Als Bewegungskontur wird hier gemäß Figur 6 ein Bewegungscluster aufgefaßt, welches z. B. fünf Zellen 21 bedeckt, wobei diese Zellen zusammenhängen und sich beispielsweise in Pfeilrichtung 5 gleichförmig bewegen.

Wird ein derartiges Bewegungsmuster (Bewegungskontur) festgestellt, welches sich gleichförmig in einer bestimmten Richtung bewegt, dann kann dieses Cluster als Menschmodell erkannt werden.

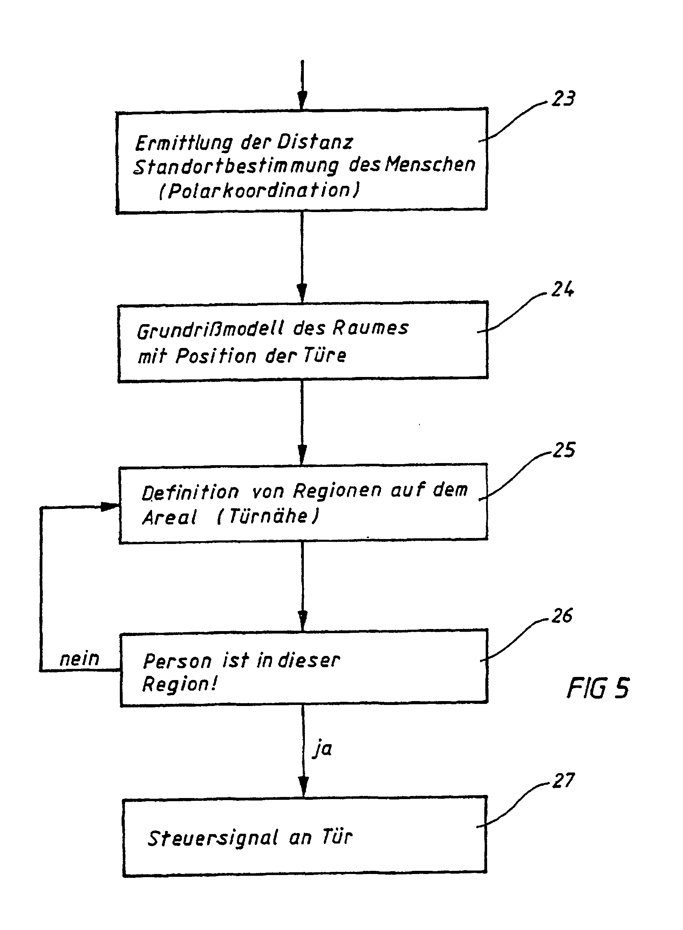

Wenn also bei Position 22 erkannt wird, daß es sich um einen sich bewegenden Menschen handelt und die Entscheidung dementsprechend fällt, dann wird gemäß Figur 5 bei Position 23 die Distanz 12 des sich bewegenden Bewegungsclusters in Bezug zur Videokamera 8 ermittelt. Daraus wird dann eine Standortbestimmung des sich bewegenden Menschen bewerkstelligt, wobei z. B. der Standort in Polarkoordinaten angegeben wird. Es wird also die momentane Position des sich bewegenden Menschen im Überwachungsareal 10 ermittelt und gleichzeitig wird aus der Bewegung und der Geschwindigkeit eine Prognose erstellt, ob die Person in die der Türöffnung zugeordneten Region des Überwachungsareals 10 gelangt oder nicht.

Bei Position 24 wird zunächst ein Grundrißmodell des Raumes, welches auch die Position derTür enthält, mit dem Bewegungsmuster des sich bewegenden Menschen verglichen.

Gemäß der allgemeinen Erläuterung wurde diese Grundrißmodell entweder durch eine Handeingabe an der Tastatur eingegeben oder es wird mit einer Videokamera erfaßt und in einem Speicher abgelegt.

Es wird nun das Grundrißmodell des Raumes mit dem Bewegungsmuster der sich bewegenden Person verglichen und es wird nun bei Position 25 geprüft, ob diese Person in eine Region des Überwachungsareals 10 gelangt, welche der Türöffnung zugeordnet ist. Diese Region liegt vorteilhaft direkt vor der Türanlage, bevorzugt wird diese Türregion etwa mit einem Abstand von 1 m links und rechts von der Türöffnung hinweg definiert und vor der Tür ein Abstand von etwa 1,50 m.

Wenn also aufgrund der Prognose nach Position 23 und der weitergehenden Messung des Bewegungsprofils dieser Person dieses Türareal erreicht wird, wird gemäß Position 26 entschieden, daß dieses Türareal nun erreicht wurde und bei Position 27 wird die Tür auf Öffnung angesteuert.

Hierbei wird noch ermittelt, wie schnell sich die Person der Tür nähert, um den Zeitpunkt des Beginns und/oder die Geschwindigkeit der Türbewegung dieser Bewegung anzupassen. Diese Öffnungssteuerung mit angepaßter Geschwindigkeit wird jedoch nur als weiteres Ausführungsbeispiel der Erfindung angeführt, wobei die Erfindung allgemein auf ein Öffnen der Tür gerichtet ist.

Figur 7 zeigt schematisch den Einsatz einer Stereokamera. Aufgrund des Bildes der ersten Kamera 8 wird berechnet, was die zweite Kamera 28 unter der Voraussetzung "sehen" sollte, daß der betrachtete Bildausschnitt 29 von Kamera 8 effektiv in der Bildfläche 30 von Kamera 28 liegt.
Stimmt das berechnete Bild mit dem von Kamera 28 effektiv "gesehenen" Bild überein, so liegt ein Objekt effektiv in der von beidem Kameras 8, 28 erfassten Bildebene.

Die vorliegende Erfindung ist also allgemein auf ein intelligentes Öffnen und Schließen einer Türanlage gerichtet. Wenn mehrere Personen in dem Überwachungsareal 10 erfaßt werden, dann wird für jede einzelne Person das Bewegungsprofil ermittelt und dementsprechend wird die Türöffnung angesteuert.

Im allgemeinen Beschreibungsteil wurde bereits schon darauf hingewiesen, daß in einem weiterführenden Verfahrensschritt auch derfür ein ungehindertes Passieren der Türanlage notwendige Platzbedarf, z.B. die Breite einer Person, erfaßt wird, welche sich auf die Türanlage zubewegt. Dementsprechend wird auch die Öffnung der Türanlage der ansteuernden Person variiert.

Kommt es hingegen zu einer Massenansammlung von Personen im Überwachungsareal, dann wird nur einmal entschieden, ob die Personen auf die Türanlage zusteuern und die Türwird dann beispielsweise nur einmal für eine gewisse Zeit offengehalten. Die Analyse der bewegten Objekte im Umkreis der Türe erfolgt also stets mit dem Ziel, ein bezüglich Benutzerfreundlichkeit, Minimierung der Wärmeverluste etc. optimales Verhalten der Türe zu steuern.

Es ist selbstverständlich, daß die Türanlage noch anderen Parametern angesteuert wird, wie z. B. von Parametern der Notöffnung, der Notschließung, Feueralarm, Diebstahlalarm und dgl. Parameter mehr. Die intelligente Öffnung und Schließung der Türanlage ist also nur ein Betriebsmcdell für eine Türanlage für den Normalfall.

Mit der erfindungsgemäßen technischen Lehre ergibt sich also der wesentliche Vorteil, daß Lüftungs- und Wärmeverluste von Türanlagen an Gebäuden in optimaler Form vermieden werden, denn die Tür wird gerade den Anforderungen angepaßt, die an sie gestellt werden, wenn ein oder mehrere Personen das Gebäude betreten oder verlassen wollen.

Damit ist auch eine Erhöhung der Sicherheit gegeben, weil sich z. B. die Tür nicht schließt, wenn sich Personen im Türraum, d. h. direkt im Schließweg der Tür befinden.

### ZEICHNUNGSLEGENDE

- 1.: Türanlage
- 2.: Schiebetür
- 3.: Eingangsöffnung
- 4.: Person
- 5.: Pfeilrichtung
- 6.: Gegenstand
- 7.: Gegenstand
- 8.: Videokamera
- 9.: Beobachtungswinkel
- 10.: Überwachungsareal
- 11.: Höhe
- 12.: Distanz
- 13: Fußboden
- 14-18: Position
- 19.: Zelle
- 20.: Zelle
- 21.: Zelle
- 22-27: Position
- 28: Videokamera
- 29: Bildfläche
- 30: Bildfläche

## Patentansprüche

1. Verfahren zur Ansteuerung von Türanlagen in Abhängigkeit von der Anwesenheit von Objekten/Personen, wobei der Bereich der Türanlage von wenigstens einer Videokamera fortlaufend beobachtet wird, wobei durch die Videokamera oder auch durch Hinzunahme geeigneter Sensoren Objektbewegungen innerhalb des zu überwachenden Raumes erfasst werden, wobei anhand des Videobildes eine Analyse stattfindet, ob es sich bei dem bewegten Objekt um ein die Benützung der Türanlage beabsichtigendes Objekt, beispielsweise eine Person, handelt, wobei im zutreffenden Fall dessen Aufenthaltsort, Bewegungsrichtung und Bewegungsgeschwindigkeit ermittelt wird, und wobei in Abhängigkeit von dem ermittelten Aufenthaltsort, der Bewegungsrichtung und der Bewegungsgeschwindigkeit des Objektes die Türanlage angesteuert wird, **dadurch gekennzeichnet, dass** eine zusätzliche Analyse stattfindet, ob es sich bei dem bewegten Objekt um ein zur Benützung der Türanlage berechtigtes Objekt handelt und dass für die Analysen, ob es sich bei dem bewegten Objekt um ein zur Benützung der Türanlage berechtigtes und dies beabsichtigendes Objekt handelt, eine Musteranalyse der sich bewegenden Kontur durchgeführt wird, und dazu die Kontur des sich bewegenden Objektes erfasst und analysiert wird, und das Objekt nur dann beispielsweise als Person erkannt wird, wenn dessen Kontur und Bewegungsverlauf mit denen eines Menschen in einem vordefinierten Maße übereinstimmt.

2. Verfahren nach Anspruch 1, **dadurch gekennzeichnet, daß** durch die Videokamera in vorgegebenen Zeitabständen der leere Raum vor der Türanlage erfasst wird und als Referenzbild abgespeichert wird.

3. Verfahren nach einem der Ansprüche 1 oder 2, **dadurch gekennzeichnet, daß** fortlaufend ein Referenzbild des leeren Raumes erstellt oder dieses aktualisiert wird.

4. Verfahren nach einem der Ansprüche 1 bis 3, **dadurch gekennzeichnet, daß** zum Erfassen von Objektbewegungen ein Vergleich des aktuellen Bildes des zu beobachtenden Raumes mit dem Referenzbild stattfindet.

5. Verfahren nach einem der Ansprüche 1 bis 4, **dadurch gekennzeichnet, daß** die zusätzlichen Sensoren Infrarotdetektoren, Gewichtssensoren, Ultraschallsensoren o.ä. sind.

6. Verfahren nach einem der Ansprüche 1 bis 5, **dadurch gekennzeichnet, daß** die Distanz des sich bewegenden Objektes zur Videokamera bestimmt und daraus die position des Objektes im Raum berechnet wird.

7. Verfahren nach einem der Ansprüche 1 bis 6, **dadurch gekennzeichnet, daß** in einem Speicher ein dreidimensionales Modell des zu überwachenden Raumes oder eines Teiles davon abgelegt ist.

8. Verfahren nach einem der Ansprüche 1 bis 7, **dadurch gekennzeichnet, daß** der zu überwachende Raum in mehrere Regionen unterteilt ist, wobei nur durch Objekte, die sich in bestimmten, vorgegebenen Regionen aufhalten und bewegen, eine Ansteuerung der Türanlage ausgelöst wird.

9. Verfahren nach einem der Ansprüche 1 bis 8, **dadurch gekennzeichnet, daß** der vom Objekt für ein ungehindertes passieren der Türanlage benötigte Platz, beispielsweise die Breite einer Person, bestimmt wird, und dadurch eine Anpassung der Öffnungsweite der Tür an die Objektbreite erfolgt.

10. Verfahren nach einem der Ansprüche 1 bis 9, **dadurch gekennzeichnet, daß** der Beginn und/oder die Geschwindigkeit der Türöffnung und/oder Türschließung in Abhängigkeit von Standort, Bewegungsrichtung und Bewegungsgeschwindigkeit des Objektes erfolgt.

11. Verfahren nach einem der Ansprüche 1 bis 10, **dadurch gekennzeichnet, daß** Lichtreflexionen im dem Überwachungsareal durch geeignete Filter ausgeschaltet werden.

12. Verfahren nach einem der Ansprüche 1 bis 11, **dadurch gekennzeichnet, daß** die Videosignale von mindestens zwei auf dieselbe Szene gerichten Kameras (Stereokamera) ausgewertet werden.

13. Verfahren nach einem der Ansprüche 1 bis 12, **dadurch gekennzeichnet, daß** das Bild der einen Kamera unter der Annahme einer vordefinierten Bildfläche auf das von der zweiten Kamera zu erwartende Bild umgerechnet und durch Vergleich von berechnetem und effektiv empfangenem Bild auf Anwesenheit und/oder Veränderungen von Objekten in der Blidfläche geschlossen wird.

14. Verfahren nach einem der Ansprüche 1 bis 13, **dadurch gekennzeichnet, daß** dievordefinierte Bildfläche Im Verlauf sich folgender Bildanalysen aufgrund der jeweils vorliegenden Ergebnisse angepasst bzw. neu gewählt wird.

15. Verfahren nach einem der Ansprüche 1 bis 13, **dadurch gekennzeichnet, daß** auch weitere Parameter wie beispielsweise Bildausschnitt, Frequenz der Bildanalysen, Bildauflösung im Verlauf sich folgender Bildanalysen aufgrund der jeweils vorliegenden Ergebnisse angepasst bzw. neu gewählt wird.

16. Verfahren nach einem der Ansprüche 1 bis 19, **dadurch gekennzeichnet, daß** zum Erreichen absoluter Betriebssicherheit die Daten mehrfach vorhandener Elemente genutzt werden.

17. Vorrichtung zur Durchführung des Verfahrens gemäß einem der Ansprüche 1 bis 16, **dadurch gekennzeichnet, daß** die Videokamera der Türanlage etwa diametral gegenüberliegt, wobei deren Blickwinkel möglichst steil iut den zu überwachenden Bereich ausgerichtet ist, und daß die Videokamera mit einer elektronischen Biidverarbeitungseinrichtung verbunden ist.

18. Vorrichtung nach Anspruch 17, **dadurch gekennzeichnet, daß** die Kamera mit einem Polarisationsfilter ausgestaltet ist.

19. Vorrichtung nach einem der Ansprüche 17 oder 18, **dadurch gekennzeichnet, daß** mehrere Kameras in unterschiedlichen Positionen angeordnet sind.

20. Vorrichtung nach einem der Ansprüche 17 bis 19, **dadurch gekennzeichnet, daß** die Kamera eine Stereokamera ist.

21. Vorrichtung nach einem der Ansprüche 17 bis 20, **dadurch gekennzeichnet, daß** der Blickwinkel der Kamera durch einen Spiegel umgelenkt wird.

## Claims

1. Method for the control of door systems as a function of the presence of objects/persons, wherein the region of the door system is continuously observed by at least one video camera, wherein by means of the video camera, possibly also with the aid of additional suitable sensors movements of objects are picked up within the space to be monitored, wherein with the aid of the video image an analysis takes place as to whether the moving object is an object intending to use the door system, for example a person, where in this case the location, the direction of movement and speed of movement of the person are determined, and wherein the door system is controlled as a function of the detected location, the detected movement direction and the detected speed of movement of the object, **characterised in that** an additional analysis takes place to determine whether the moving object relates to an object authorised to use the door system and **in that** for the analysis of whether the moving object relates to an object authorised to use the door system and intending to do so, a sample analysis of the moving contour is carried out and additionally the contour of the moving object is detected and analysed, and the object is recognised for example as a person only if its contour and sequence of movement coincide in a predetermined manner with those of a human being.

2. Method according to claim 1, **characterised in that** the empty space in front of the door system is detected by the video camera at predetermined intervals of time and stored as a reference image.

3. Method according to one of claims 1 or 2, **characterised in that** a reference image of the empty space is produced or this is updated continuously.

4. Method according to one of claims 1 to 3, **characterised in that** for the detection of object movements a comparison of the current image of the space to be observed with the reference image takes place.

5. Method according to one of claims 1 to 4, **characterised in that** the additional sensors are infrared detectors, weight sensors, ultrasound sensors or the like.

6. Method according to one of claims 1 to 5, **characterised in that** the distance from the moving object to the video camera is determined and from this is calculated the position of the object in space.

7. Method according to one of claims 1 to 6, **characterised in that** in a memory is filed a three-dimensional model of the space to be monitored or of a portion thereof.

8. Method according to one of claims 1 to 7, **characterised in that** the space to be monitored is divided into several regions, wherein control of the door system is triggered only by objects which stop and move in certain predetermined regions.

9. Method according to one of claims 1 to 8, **characterised in that** the space required by the object for unhindered passage through the door system, for example the width of a person, is determined, and hence adaptation of the opening width of the door to the object width is effected.

10. Method according to one of claims 1 to 9, **characterised in that** the commencement and/or the speed of the door opening and/or door closing is effected as a function of location, direction of movement and speed of movement of the object.

11. Method according to one of claims 1 to 10, **characterised in that** light reflections in the monitoring area are excluded by suitable filters

12. Method according to one of claims 1 to 11, **characterised in that** the video signals of at least two cameras (stereo camera) directed onto the same scene are evaluated.

13. Method according to one of claims 1 to 12, **characterised in that** the image of one camera is converted, assuming a predefined image area, to the image to be expected from the second camera, and by comparison of calculated and actually received images the presence and/or changes of objects in the image area are deduced.

14. Method according to one of claims 1 to 13, **characterised in that** the predefined image area is adapted or reselected in the course of successive image analyses on the basis of the results available at any given time.

15. Method according to one of claims 1 to 11, **characterised in that** further parameters, for example image detail, frequency of image analyses, image resolution, are also adapted or reselected in the course of successive image analyses on the basis of the results available at any given time.

16. Method according to one of claims 1 to 11, **characterised in that** to achieve absolute operational reliability the data of repeatedly occurring elements are used.

17. Apparatus for carrying out the method according to one of claims 1 to 16, **characterised in that** the video camera is located approximately diametrically opposite the door system, wherein the angle of view thereof is aligned as steeply as possible with the region to be monitored, and **in that** the video camera is connected to an electronic image processing device.

18. Apparatus according to claim 17, **characterised in that** the camera is equipped with a polarisation filter.

19. Apparatus according to one of claims 17 or 18, **characterised in that** several cameras are arranged in different positions.

20. Apparatus according to one of claims 17 to 19, **characterised in that** the camera is a stereo camera.

21. Apparatus according to one of claims 17 to 20, **characterised in that** the angle of view of the camera is deflected by a mirror.

## Revendications

1. Procédé pour commander des installations de portes en fonction de la présence d'objets/de personnes, selon lequel la zone de l'installation de porte est surveillée en permanence par au moins une caméra vidéo, grâce à la caméra vidéo et/ou à des capteurs adéquats on détecte les mouvements d'objets à l'intérieur de l'espace à surveiller, une analyse a lieu grâce à l'image vidéo, pour voir si l'objet en mouvement est un objet ayant l'intention d'utiliser l'installation de porte, par exemple une personne, étant précisé que si c'est le cas, la position, le sens de mouvement et la vitesse dudit objet sont déterminés, et l'installation de porte est commandée en fonction de la position, du sens de mouvement et de la vitesse de l'objet qui ont été déterminés, **caractérisé en ce qu'**une analyse supplémentaire a lieu pour voir si l'objet en mouvement est un objet autorisé à utiliser l'installation de porte, et **en ce que** le contour de l'objet en mouvement est détecté et analysé et l'objet n'est identifié comme étant par exemple une personne que si son contour et sa trajectoire correspondent dans une mesure prédéfinie à ceux d'un être humain.

2. Procédé selon la revendication 1, **caractérisé en ce que** l'espace vide situé devant l'installation de porte est détecté à intervalles prédéfinis grâce à la caméra vidéo et est mis en mémoire comme image de référence.

3. Procédé selon la revendication 1 ou 2, **caractérisé en ce qu'**une image de référence de l'espace vide est établie en permanence ou est actualisée.

4. Procédé selon l'une des revendications 1 à 3, **caractérisé en ce que** pour détecter des mouvements d'objets, une comparaison entre l'image du moment de l'espace à observer et l'image de référence a lieu.

5. Procédé selon l'une des revendications 1 à 4, **caractérisé en ce que** les capteurs supplémentaires sont des détecteurs à infrarouge, des capteurs de poids, des capteurs à ultrasons, etc.

6. Procédé selon l'une des revendications 1 à 5, **caractérisé en ce que** la distance entre l'objet en mouvement et la caméra vidéo est définie et à partir de cette distance est calculée la position de l'objet dans l'espace.

7. Procédé selon l'une des revendications 1 à 6, **caractérisé en ce qu'**un modèle à trois dimensions de l'espace à surveiller ou d'une partie de celui-ci est stocké dans une mémoire.

8. Procédé selon l'une des revendications 1 à 7, **caractérisé en ce que** l'espace à surveiller est divisé en plusieurs régions, une commande de l'installation de porte n'étant déclenchée que par des objets qui se trouvent et se déplacent dans des régions prédéfinies.

9. Procédé selon l'une des revendications 1 à 8, **caractérisé en ce que** la place nécessaire pour que l'objet franchisse l'installation de porte sans être gêné, par exemple la largeur d'une personne, est définie et une adaptation de la largeur de la porte à la largeur de l'objet est ainsi effectuée.

10. Procédé selon l'une des revendications 1 à 9, **caractérisé en ce que** le début et/ou la vitesse de l'ouverture et/ou de la fermeture de la porte sont fonction de l'emplacement, du sens de déplacement et de la vitesse de déplacement de l'objet.

11. Procédé selon l'une des revendications 1 à 10, **caractérisé en ce que** les réflexions de lumière dans le périmètre de surveillance sont éliminées par des filtres adéquats.

12. Procédé selon l'une des revendications 1 à 11, **caractérisé en ce que** les signaux vidéo sont évalués par au moins deux caméras (caméra stéréo) orientées vers le même endroit.

13. Procédé selon l'une des revendications 1 à 12, **caractérisé en ce que** l'on convertit l'image de la première caméra, en supposant une surface d'image prédéfinie, en une image à attendre de la seconde caméra, et en comparant l'image calculée et l'image effectivement reçue, on tire des conclusions quant à la présence et/ou aux variations d'objets dans la surface d'image.

14. Procédé selon l'une des revendications 1 à 13, **caractérisé en ce que** la surface d'image prédéfinie est adaptée ou re-sélectionnée, au cours d'analyses d'image successives, à partir des résultats dont on dispose à chaque fois.

15. Procédé selon l'une des revendications 1 à 11, **caractérisé en ce que** d'autres paramètres comme par exemple le cadrage, la fréquence des analyses d'image, la définition d'image sont adaptés ou re-sélectionnés, au cours d'analyses d'image successives, à partir des résultats dont on dispose à chaque fois.

16. Procédé selon l'une des revendications 1 à 11, **caractérisé en ce que** pour obtenir une sécurité de fonctionnement absolue, on utilise les données d'éléments multiples.

17. Dispositif pour mettre en oeuvre le procédé selon l'une des revendications 1 à 16, **caractérisé en ce que** la caméra vidéo est à peu près diamétralement opposée par rapport à l'installation de porte, son angle de visée étant dirigé vers la zone à surveiller suivant un angle aussi obtus que possible, et **en ce que** la caméra vidéo est reliée à un dispositif électronique de traitement d'images.

18. Dispositif selon la revendication 17, **caractérisé en ce que** la caméra est équipée d'un filtre de polarisation.

19. Dispositif selon la revendication 17 ou 18, **caractérisé en ce que** plusieurs caméras sont disposées dans des positions différentes.

20. Dispositif selon l'une des revendications 17 à 19, **caractérisé en ce que** la caméra est une caméra stéréo.

21. Dispositif selon l'une des revendications 17 à 20, **caractérisé en ce que** l'angle de visée de la caméra est dévié par un miroir.
